Europäisches Patentamt

European Patent Office

Office européen des brevets

(19)

(11) Veröffentlichungsnummer: **0 443 150 A1**

# EUROPÄISCHE PATENTANMELDUNG

(12)

(21) Anmeldenummer: **90124362.6**

(22) Anmeldetag: **17.12.90**

(51) Int. Cl.⁵: **B60T 8/36, B60T 13/68**

(30) Priorität: **22.02.90 DE 4005608**

(43) Veröffentlichungstag der Anmeldung:
**28.08.91 Patentblatt 91/35**

(84) Benannte Vertragsstaaten:
**DE IT SE**

(71) Anmelder: **ROBERT BOSCH GmbH**
**Postfach 10 60 50**
**W-7000 Stuttgart 10(DE)**

(72) Erfinder: **Stumpe, Werner, Dipl.-Ing.**
**Ferdinand-Hanauer-Strasse 62**
**W-7000 Stuttgart 50(DE)**
Erfinder: **Angermair, Ernst**
**Breslauer Strasse 115/1**
**W-7120 Bietigheim-Bissingen(DE)**

(54) **Drucksteuerventilaggregat, insbesondere für druckluftbetätigte Fahrzeugbremsanlagen.**

(57) Bei vorgesteuerten Drucksteuerventilaggregaten sollen durch Druckschwingungen verursachte, das Schaltverhalten von Einlaß- und Auslaßventilen beeinflussende Rückkopplungen verhindert werden.

Das Drucksteuerventilaggregat (1) besitzt ein Einlaßventil (15) sowie ein Auslaßventil (16), deren Ventilschließglied (23, 33) durch Druck in einer angrenzenden Steuerkammer (22, 32) in Schließstellung gehalten ist. Dem Einlaßventil (15) sowie dem Auslaßventil (16) zugeordnete Vorsteuerventile (17 und 18) vermögen Auslaßkanäle (24, 35) freizugeben, durch welche die Steuerkammern (22, 32) in eine verbraucherseitige Druckmittelausgangskammer (7) bzw. eine entlastete Druckmittelauslaßkammer (9) belüftbar sind. Rückwirkungen von diesen Kammern (7, 9) in die jeweilige Steuerkammer (22, 32) sind durch ein im entsprechenden Auslaßkanal (24, 35) angeordnetes Rückschlagventil (25, 36) ausgeschaltet.

Das Drucksteuerventilaggregat (1) ist zur Verwendung z. B. in druckluftbetätigten Fahrzeugbremsanlagen bestimmt.

EP 0 443 150 A1

Stand der Technik

Die Erfindung geht aus von einem Drucksteuerventilaggregat nach der Gattung des Hauptanspruchs.

Es ist schon ein Drucksteuerventilaggregat bekannt (DE-OS 33 45 697), bei dem der jeweilige Auslaßkanal als Durchbruch im Ventilschließglied des Einlaßventils bzw. des Auslaßventils ausgebildet ist. Beim Entlüften der entsprechenden Steuerkammer kommt es daher zu einer relativ kurzen, ungedrosselten Verbindung zwischen der jeweiligen Steuerkammer und der dem Einlaßventil zugeordneten Druckmittelausgangskammer bzw. der dem Auslaßventil zugeordneten Druckmittelauslaßkammer. Diese Ausgestaltung des Auslaßkanals hat Rückkopplungen zwischen der Druckmittelausgangskammer bzw. der Druckmittelauslaßkammer und der Steuerkammer des entsprechenden Ventils zur Folge, welche sich nachteilig auf die Funktion des Einlaßventils bzw. des Auslaßventils auswirkt. Durch Umlenkungen und Querschnittsverengungen sowie insbesondere bei sehr schnell öffnendem Einlaßventil oder Auslaßventil im Drucksteuerventilaggregat und in angeschlossenen Leitungen der Bremsanlage hervorgerufenen Druckschwingungen wirken nämlich nicht nur arbeitsseitig, sondern durch den entsprechenden offenen Auslaßkanal hindurch auch steuerseitig in der jeweiligen Steuerkammer. Am Ventilschließglied kommt es daher arbeits- und steuerseitig zu Druckspitzen, die nicht synchron verlaufen. Da das Ventilschließglied aber eine relativ kleine Masse besitzt, treten in der Offenstellung des jeweiligen Ventils starke Schwingungen des Ventilschließgliedes auf. Diese Schwingungen behindern einerseits den Durchfluß der Druckluft durch das Ventil, andererseits wird dieses übermäßig beansprucht.

Vorteile der Erfindung

Das erfindungsgemäße Drucksteuerventilaggregat mit dem kennzeichnenden Merkmal des Hauptanspruchs hat demgegenüber den Vorteil, daß die Steuerkammer des entsprechenden Ventils schnell entlüftet werden kann, eine Rückkopplung von der Druckmittelausgangskammer bzw. von der Druckmittelauslaßkammer in die Steuerkammer durch die Wirkung des Rückschlagventils aber unterbunden ist. Druckstöße können daher die Steuerkammer nicht erreichen. Die Funktion des Einlaßventils bzw. des Auslaßventils des Drucksteuerventilaggregats ist somit erheblich verbessert.

Durch die in den Unteransprüchen aufgeführten Maßnahmen sind vorteilhafte Weiterbildungen und Verbesserungen des im Hauptanspruch angegebenen Drucksteuerventilaggregats möglich.

Zeichnung

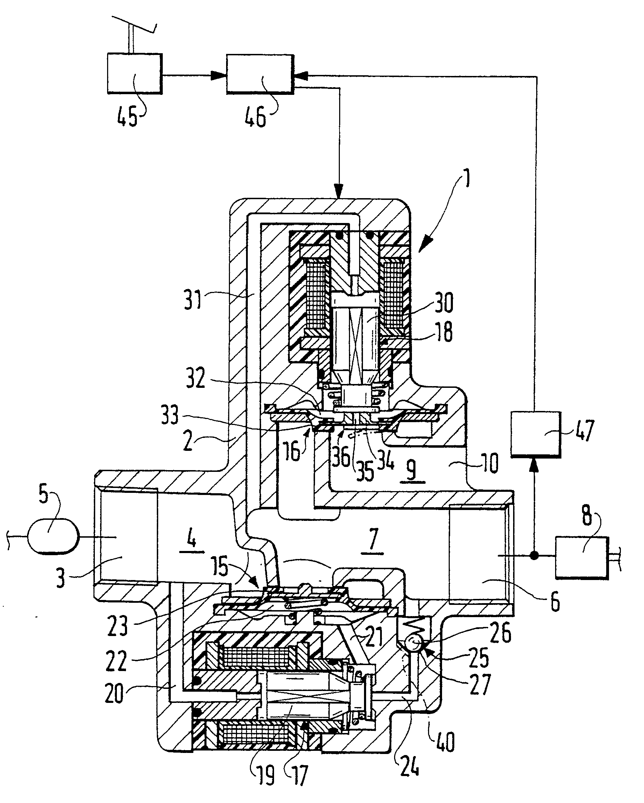

Ein Ausführungsbeispiel eines erfindungsgemäßen Drucksteuerventilaggregats ist in der Zeichnung in Verbindung mit einem schematisch wiedergegebenen Teil einer Bremsanlage vereinfacht dargestellt und in der nachfolgenden Beschreibung näher erläutert.

Beschreibung des Ausführungsbeispiels

Das in der Zeichnung dargestellte Drucksteuerventilaggregat 1 hat ein Gehäuse 2 mit einem Druckmitteleingang 3, welcher in eine Druckmitteleingangskammer 4 mündet. Der Druckmitteleingang 3 steht mit einem Vorratsbehälter 5 einer Druckluftquelle in Verbindung. Das Gehäuse 2 hat außerdem einen Druckmittelausgang 6 einer Druckmittelausgangskammer 7. Diese ist über den Druckmittelausgang 6 mit einem Bremszylinder 8 als Verbraucher verbunden. Ferner besitzt das Gehäuse 2 eine Druckmittelauslaßkammer 9, welche zu einer Entlastungsstelle 10 (Atomsphäre) führt. Die Druckmitteleingangskammer 4 ist über ein Einlaßventil 15 mit der Druckmittelausgangskammer 7 verbindbar, während von dieser mit der Druckmittelauslaßkammer 9 eine Verbindung über ein Auslaßventil 16 herstellbar ist. Das Einlaßventil 15 und das Auslaßventil 16 sind jeweils mit einem elektromagnetisch schaltbaren Vorsteuerventil 17 bzw. 18 betätigbar. Beide Vorsteuerventile 17 und 18 sind als 3/2-Wegeventile ausgebildet.

Das Einlaßvorsteuerventil 17 besitzt einen als Schließglied wirkenden Ventilanker 19, der in der gezeichneten Stellung einen von der Druckmitteleinangskammer 4 herführenden Einlaßkanal 20 mit einem Steuerkanal 21 verbindet. Dieser mündet in eine Steuerkammer 22 des Einlaßventils 15 ein. Das Einlaßventil 15 hat ein membranförmiges Ventilschließglied 23, welches aufgrund des von der Druckmitteleingangskammer 4 durch den Einlaßkanal 20 und den Steuerkanal 21 herangeführten Druckes in der Steuerkammer 22 in seiner Schließstellung gehalten ist. In der gezeichneten Stellung des Ventilankers 19 schließt dieser einen ersten Auslaßkanal 24, der mit der Druckmittelausgangskammer 7 in Verbindung steht. Im Zuge des Auslaßkanals 24 ist ein Rückschlagventil 25 mit einer federbelasteten Kugel 26 angeordnet, welche an einem vom Auslaßkanal gebildeten Ventilsitz 27 angreift. Das Einlaßvorsteuerventil 17 gibt in der anderen Stellung des Ventilankers 19 die Verbindung zwischen dem Steuerkanal 21 und dem ersten Auslaßkanal 24 frei. Die Steuerkammer 22 des Einlaßventils 15 kann daher durch den Steuerkanal 21 und den ersten Auslaßkanal 24 unter Überwindung des einen geringen Öffnungsdruck aufweisenden Rückschlagventils 25 in die Druckmittelausgangskammer 7 entlüftet werden. Der in der Druckmitteleingangskammer 4 herrschende Druck vermag nun das Ventilschließglied 23 des Einlaßventils 15 zu öffnen, so daß Druckluft durch die Druckmittelausgangskammer 7 zum Bremszylinder 8 strömen kann. Das Eindringen von Druckluft von der Druckmittelausgangskammer 7 in die Steuerkammer 22 des Einlaßventils 15 ist dagegen durch das Rückschlagventil 25 unterbunden.

Das Auslaßvorsteuerventil 18 ist in weitgehend identisch aufgebaut wie das Einlaßvorsteuerventile 17. Es besitzt ebenfalls einen Ventilanker 30, welcher in der gezeichneten Stellung einen von der Druckmittelausgangskammer 7 herführenden Einlaßkanal 31 freigibt. Es besteht daher in dieser Ankerstellung eine druckleitende Verbindung zwischen der Druckmittelausgangskammer 7 und einer Steuerkammer 32 des Auslaßventils 16. Dieses besitzt ebenfalls ein membranförmig ausgebildetes Ventilschließglied 33 mit einer mittig angeordneten Ventilplatte 34. Die Ventilplatte 34 besitzt als zweiten Auslaßkanal 35 einen Durchbruch, mit dem in der anderen Schaltstellung des Ventilankers 30 eine Verbindung zwischen der Steuerkammer 32 des Auslaßventils 16 und der Druckmittelauslaßkammer 9 herstellbar ist. Auf der Seite der Druckmittelauslaßkammer 9 ist am Ventilschließglied 33 ein Rückschlagventil 36 in Form eines einen geringen Öffnungsdruck aufweisenden Zungenventils angeordnet. (Dessen Schließstellung ist mit ausgezogenen Linien, die Offenstellung mit strichpunktierten Linien wiedergegeben.) In der Steuerkammer 32 herrschender Druck kann sich bei umgeschaltetem Vorsteuerventil 18 durch den zweiten Auslaßkanal 35 hindurch unter Überwindung des Rückschlagventils 36 in die mit der Atmosphäre verbundene Druckmittelauslaßkammer 9 abbauen. In der Druckmittelausgangskammer 7 herrschender Druck vermag daher das Auslaßventil 16 in seine Offenstellung umzuschalten, so daß Druckluft vom Bremszylinder 8 durch die Druckmittelausgangskammer 7 zur Druckmittelauslaßkammer 9 und damit zur Entlastungsstelle 10 abströmen kann. Dabei verhindert das Rückschlagventil 36 das Einströmen von Druckluft von der Druckmittelauslaßkammer 9 in die Steuerkammer 32.

Beim dargestellten Ausführungsbeispiel des Drucksteuerventilaggregats 1 sind unterschiedliche Ausführungsformen der Ventilschließglieder 23 und 33, der Führung der Kanäle 21, 24 und 35 sowie der Rückschlagventile 25 und 36 wiedergegeben. Dies hat lediglich den Zweck, unterschiedliche Varianten aufzuzeigen. Vorzugsweise wird man jedoch ein Drucksteuerventilaggregat 1 sowohl beim Einlaßventil 15 als auch beim Auslaßventil 16 mit identisch ausgebildeten Ventilschließgliedern 23 und 33 und Rückschlagventilen 25 und 36 ausstatten.

Mit der Anordnung der dicht schließenden Rückschlagventile 25 und 36 wird zwar eine Rückwirkung durch den jeweiligen Auslaßkanal 24 bzw. 35 in die entsprechende Steuerkammer 22 des Einlaßventils 15 bzw. die Steuerkammer 32 des Auslaßventils 16 völlig vermieden. Eine ausreichende Schutzwirkung gegen Rückkopplungen wird aber auch schon dadurch erreicht, wenn die beiden Rückschlagventile 25 und 36 nicht völlig dicht schließen. Es reicht aus, wenn eine Drosselstelle 40, wie sie beispielsweise als radial verlaufender Kanal mit strichpunktierten Linien im Ventilsitz 27 des Rückschlagventils 25 angedeutet ist, die erwähnten Rückwirkungen weitgehend unterdrückt, die Entlüftung der Steuerkammer 22 aber nicht behindert. Eine derartige Drosselstelle kann auch in der Ventilplatte 34 vorgesehen sein (nicht dargestellt). Bei geöffnetem Rückschlagventil ist die Drosselstelle ausgeschaltet, bei geschlossenem Rückschlagventil dagegen eingeschaltet, d. h. sie ist wirksam.

Das Drucksteuerventilaggregat 1 ist Element einer Fahrzeugbremsanlage. In der Zeichnung ist lediglich ein Teil dieser Bremsanlage dargestellt. Sie weist einen elektrischen Bremssollwertgeber 45 auf, dessen Signal einem elektronischen Steuergerät 46 zuführbar ist. An dieses ist ein Istwertgeber 47 angeschlossen, welcher den Druck im Bremszylinder 8 erfaßt und ein entsprechendes Signal an das Steuergerät 46 abgibt. Entsprechend dem Fahrerwunsch sowie dem Verhalten des Fahrzeugs während des Bremsvorganges gibt das elektronische Steuergerät 46 Schaltsignale an das entsprechende Vorsteuerventil 17 oder 18 ab. Die Vorsteuerventile 17 und 18 schalten das Einlaßventil 15 bzw. das Auslaßventil 16, um Bremsdruckaufbau, Druckhalten oder Bremsdruckabbau im Bremszylinder 8 zu erzielen.

## Patentansprüche

1. Drucksteuerventilaggregat (1), insbesondere für druckluftbetätigte Fahrzeugbremsanlagen, mit einer Druckmitteleingangskammer (4), die über einen Druckmitteleingang (3) mit einer Druckmittelquelle (Vorratsbehälter 5) verbunden ist, mit einer Druckmittelausgangskammer (7), die über einen Druckmittelausgang (6) mit einem Verbraucher (Bremszylinder 8) verbunden ist, mit einem Einlaßventil (15), über das die Druckmitteleingangskammer (4) mit der Druckmittelausgangskammer (7) verbindbar ist, und mit einem Auslaßventil (16), über das die Druckmittelausgangskammer (7) mit einem zu einer Entlastungsstelle (10) führenden Druckmittelauslaßkammer (9) verbindbar ist, sowie mit einem dem Einlaßventil (15) und einem dem Auslaßventil (16) zugeordneten Ventilschließglied (23, 33), welches in Schließrichtung mit in je eine dem entsprechenden Ventilschließglied zugeordnete Steuerkammer (22, 32) eingesteuerter Druckluft beaufschlagbar ist, wobei die Steuerkammer (22) des Einlaßventils (15) mit einem Einlaßvorsteuerventil (17) über einen ersten Auslaßkanal (24) mit der Druckmittelausgangskammer (7) und die Steuerkammer (32) des Auslaßventils (16) mit einem Auslaßvorsteuerventil (18) über einen zweiten Auslaßkanal (35) mit der Druckmittelauslaßkammer (9) verbindbar sind, dadurch gekennzeichnet, daß dem jeweiligen Auslaßkanal (24, 35) ein in Strömungsrichtung von der entsprechenden Steuerkammer (22, 32) zur Druckmittelausgangskammer (7) bzw. zur Druckmittelauslaßkammer (9) öffnendes Rückschlagventil (25, 36) zugeordnet ist.

2. Drucksteuerventilaggregat nach Anspruch 1, dadurch gekennzeichnet, daß das Rückschlagventil (25) eine federbelastete Kugel (26) aufweist, welche an einem vom Auslaßkanal (24) gebildeten Ventilsitz angreift.

3. Drucksteuerventilaggregat nach Anspruch 1, dadurch gekennzeichnet, daß das Rückschlagventil (36) als Zungenventil ausgebildet ist, welches mit einem als Auslaßkanal (35) dienenden Durchbruch des Ventilschließgliedes (33) zusammenwirkt.

4. Drucksteuerventilaggregat nach Anspruch 1, dadurch gekennzeichnet, daß im jeweiligen Auslaßkanal (24, 35) eine Drosselstelle (40) angeordnet ist.

5. Drucksteuerventilaggregat nach Anspruch 4, dadurch gekennzeichnet, daß die Drosselstelle (40) mit dem Rückschlagventil (25, 36) ein- und ausschaltbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 345 697 (WABCO WESTINGHOUSE)<br>* Seite 7, Zeile 14 - Seite 12, Zeile 25; Figur<br>* & EP-A-145 858 (WABCO WESTINGHOUSE)<br>– – – | 1-4 | B 60 T 8/36<br>B 60 T 13/68 |
| Y | EP-A-0 304 610 (WABCO WESTINGHOUSE)<br>* Spalte 3, Zeile 22 - Spalte 10, Zeile 37; Figuren 1-3; Spalte 5, Zeile 53 - Spalte 6, Zeile 7 * | 1-4 | |
| A | | 5 | |
| | – – – | | |
| A | FR-A-2 359 736 (GIRLING)<br>* Seite 3, Zeile 21 - Seite 7, Zeile 28; Figuren 3-7 *<br>– – – | 1,5 | |
| A | FR-A-2 077 410 (FIAT)<br>* Seite 2, Zeile 5 - Seite 8, Zeile 36; Figuren 1,5 *<br>– – – – – | 1-2,4 | |

**RECHERCHIERTE SACHGEBIETE (Int. Cl.5)**

B 60 T
F 16 K

Der vorliegende Recherchenbericht wurde für alle Patentansprüche erstellt

| Recherchenort | Abschlußdatum der Recherche | Prüfer |
|---|---|---|
| Den Haag | 05 Juni 91 | VAN DER VEEN F. |